**Europäisches Patentamt**

**European Patent Office**

**Office européen des brevets**

(19)

(11) Veröffentlichungsnummer : **0 327 705 B1**

(12)

# EUROPÄISCHE PATENTSCHRIFT

(45) Veröffentlichungstag der Patentschrift :
**11.03.92 Patentblatt 92/11**

(51) Int. Cl.$^5$ : **F16H 25/20**

(21) Anmeldenummer : **88120613.0**

(22) Anmeldetag : **09.12.88**

(54) Mechanische Lineareinheit.

(30) Priorität : **11.02.88 DE 3804117**

(43) Veröffentlichungstag der Anmeldung :
**16.08.89 Patentblatt 89/33**

(45) Bekanntmachung des Hinweises auf die
Patenterteilung :
**11.03.92 Patentblatt 92/11**

(84) Benannte Vertragsstaaten :
**AT BE CH DE ES FR GB GR IT LI LU NL SE**

(56) Entgegenhaltungen :
**EP-A- 0 106 826**

(56) Entgegenhaltungen :
**DE-C- 3 205 143**
**GB-A- 2 106 821**
**US-A- 2 885 920**
**US-A- 3 109 335**

(73) Patentinhaber : **NEFF GMBH**
**Bonholzstrasse 17**
**W-7035 Waldenbuch (DE)**

(72) Erfinder : **Der Erfinder hat auf seine Nennung
verzichtet**

(74) Vertreter : **Rüger, Rudolf, Dr.-Ing. et al
Patentanwälte Dr.-Ing. R. Rüger Dipl.-Ing. H.P.
Barthelt Webergasse 3 Postfach 348
W-7300 Esslingen/Neckar (DE)**

## Beschreibung

Die Erfindung betrifft eine mechanische Lineareinheit zur Erzeugung einer begrenzten Linearbewegung eines angetriebenen Kraftübertragungselementes mit den Merkmalen des Oberbegriffs des Patentanspruchs 1.

Beispielsweise aus der DE-C-32 05 143 ist eine mechanische Lineareinheit bekannt, deren Gewindespindel in einem rohrförmigen, formstabilen, längsgeschlitzten Gehäuse untergebracht ist, das endseitig Lagerflansche für die Gewindespindel trägt und durch dessen Längsschlitz das mit der Spindelmutter verbundene Kraftübertragungselement ragt. Diese Lineareinheit gestattet es, das Kraftübertragungselement und mit diesem verbundene angetriebene Maschinenelemente mit vorbestimmter Geschwindigkeit linear zu bewegen und exakt zu positionieren. Solange die axiale Länge der Gewindespindel ein bestimmtes, von ihrem Durchmesser abhängiges Mindestmaß nicht überschreitet und die maximale Drehzahl der Gewindespindel unterhalb eines vorbestimmten Grenzwertes bleibt, genügt die durch die das Gehäuse endseitig Abschließenden Lagerflansche und die Spindelmutter selbst gegebene radiale Abstützung der Gewindespindel. Bei der Verwendung einer längeren, dünneren Gewindespindel und deren Antrieb mit höheren Drehzahlen müssen aber zusätzliche Vorkehrungen getroffen werden, um die Gewindespindel in den Bereichen zwischen der Spindelmutter und den endseitigen Lagerflanschen zusätlich radial abzustützen. Ohne eine solche Abstützung besteht die Gefahr, daß sich die Gewindespindel durchbiegt und im angetriebenen Zustand eine Orbitalbewegung um die Längsachse des Gehäuses ausführt, die zu einer übermäßigen Beanspruchung der Gewindespindel und der Spindelmutter oder sogar zu einer Beschädigung des Gehäuses selbst oder der Lager führen kann. Da sich die Länge dieser ununterstützen Bereiche der Gewindespindel mit der Stellung der Spindelmutter ändert, muß auch die Abstützung der Gewindespindel mit der Spindelmutter mitwandern, um eine Behinderung der Längsbewegung der Spindelmutter auszuschließen.

In der Praxis ist es bekannt, beidseitig der Spindelmutter angeordnete, die Gewindespindel umschließende, ringförmige Abstützelemente zu verwenden, die an der Gehäuseinnenwand längsgeführt und abgestützt sind, wobei Mitnehmereinrichtungen vorgesehen sind, die es der Spindelmutter erlauben, die Abstützelemente bei ihrer Längsbewegung mitzuschleppen. Zu diesem Zwecke sind beidseitig der Spindelmutter befindliche ringförmige abstützelemente jeweils paarweise durch parallel zu der Gewindespindel ausgerichtete Stahlbänder unterschiedlicher Länge miteinander verbunden, die an der Spindelmutter Längverschieblich geführt sind. Bei ihrer Längsbewegung in einer Richtung sammelt die Spindelmutter die auf der in Bewegungsrichtung vornliegenden Stirnseite stehenden Abstützelemente fortschreitend auf, wobei sie die aufgesammelten Abstützelemente vor sich herschiebt. Gleichzeitig werden dabei die mit diesen vorgeschobenen Abstützelementen über die Stahlbänder verbundenen, auf der Rückseite der Spindelmutter befindlichen Abstützelemente mitgeschleppt, wobei diese mitgeschleppten Abstützelemente wegen der unterschiedlichen Länge der Stahlbänder in unterschiedlichen Abständen zu der hinteren Stirnseite der Spindelmutter stehen, mit der Folge, daß die Gewindespindel in entsprechenden Abständen durch diese Abstützelemente radial abgestützt wird. Bei der Umkehr der Bewegungsrichtung der Spindelmutter läuft dieser Vorgang in der umgekehrten Richtung in entsprechender Weise ab.

Wegen der ringförmigen Abstützelemente jeweils paarweise miteinander verbindenden Stahlbänder ist die Zahl der praktisch verwendbaren Abstützelemente konstruktiv beschränkt, während andererseits der maximale Abstand der Abstützelemente zu der Spindelmutter durch die Strahlbänder vorgegeben ist, derart, daß bei längeren Hubwegen der Spindelmutter die Abstützelemente in ihrem vorgegebenen Abstand Spindelmutter folgen. Dies kann dazu führen, daß bei sehr langen Gewindespindeln zwischen dem letzten Abstützelemente und dem benachbarten Lagerflansch lange ununterstützte Bereiche der Gewindespindel unvermeidbar sind. Außerdem fallen bei vertikalem Einbau die Abstützelemente nach unten.

Aus der US-A-3109 335, von der die Erfindung ausgeht, ist es bekannt, bei einer Drehmaschine die Leitspindel beidseitig des Supports gegen eine an dem Maschinenbett angeordnete Führungsbahn durch im wesentlichen platten- oder scheibenförmige Abstützelemente abzustützen, die die Zug- und die Leitspindel jeweils ringförmig umschließen und deren Verteilung über den Verstellweg des Supports ohne Verwendung der vorerwähnten Stahlbänder erfolgt. Dazu ist in jedem Abstützelement ein quer zu der Leitspindel verschieblich gelagerter, federbelasteter Schieber vorgesehen, der in Gestalt eines zylindrischen, bolzenartigen Plunger-Kolbens ausgebildet ist und von ortsfesten, in Abständen über die Länge der Führungsbahn verteilt angeordneten Rasteinrichtungen gesteuert wird, die nach Art von knopfartigen Vorsprüngen ausgebildet sind. Die zur Aufnahme dieser zylindrischen Schieber erforderlichen Lagerbohrungen in den Abstützelementen sind jeweils im seitlichen Abstand von der Leitspindel angeordnet, was einen verhältnismäßig groden Platzbedarf bedingt. Wenn diesem aus konstruktiven Gründen nicht entsprochen werden kann, wie dies bspw. bei einer mechanischen Lineareinheit der eingangs erwähnten Art der Fall ist, bei der die Gewindespindel in einem rohrförmigen, längsgeschlitzten Gehäuse untergebracht ist, das die Gewindespindel in verhältnismäßig geringem, lediglich durch den Durchmesser der Spindelmutter gegebenen Abstand umgibt, bereitet die Unterbringung einer solchen verhältnismäßig langen Lagerbohrung in dem Bereich neben der Gewindespindel erhebliche Schwierigkeiten.

Grundsätzlich gleiches gilt auch für eine aus der US-A-2885 920 bekannte Leitspindelabstützung bei einer Drehbank, die nach ähnlichen Prinzipien aufgebaut ist. Die Rasteinrichtungen weisen hierbei Rastvertiefungen in der Führungsbahn und damit zusammenwirkende Rasten der zylindrischen, bolzenartigen Schiener der Abstützelemente auf.

Schließlich ist es aus der EP-A-106 826 bekannt, bei einer mechanischen Lineareinheit auf der Innenwand eines rohrförmigen, längsgeschlitzten Gehäuses Führungsbahnen für die Spindelmutter vorzusehen, doch ist diese Lineareinheit nicht mit mitschleppbaren Abstützelementen für die Gewindespindel ausgebildet.

Aufgabe der Erfindung ist es deshalb, den erwähnten Problemen abzuhelfen und eine mechanische Lineareinheit zu schaffen, bei der die Gewindespindel auf beiden Seiten der Spindelmutter an praktisch beliebig vielen Abstützstellen radial abgestützt ist, deren Abstand ohne großen konstruktiven Aufwand bei geringem Platzaufwand zweckentsprechend gewählt werden kann.

Zur Lösung dieser Aufgabe weist die eingangs genannte mechanische Lineareinheit erfindungsgemäß die Merkmale des kennzeichnenden Teils des Patentanspruchs 1 auf.

Da jede Mitnehmereinrichtung wenigstens eine von der Spindelmutter stirnseitig axial vorragende, zu der Gewindespindel parallele Mitnehmerschiene oder -stange aufweist, die alle auf der jeweiligen Seite axial aufgesammelten Abstützelemente gemeinsam über- oder durchgreifend ausgebildet ist und Kupplungsmittel für deren Schieber trägt, sind besondere Maßnahmen , um das Abkuppeln von mehr als nur dem letzten Abstützelement zu verhindern, überflüssig.

Durch entsprechende Verteilung der Rasteinrichtungen über die Läge der Führungsbahn können somit die Abstützstellen für die Gewindespindel beliebig vorherbestimmt werden. Bei ihrer Längsbewegung läßt die Spindelmutter auf ihrer Rückseite bei jeder Rasteinrichtung ein Abstützelement zurück, das ortsfest verraster eine Abstützung für die Gewindespindeln bildet, während gleichzeitig die auf der in der Bewegungsrichtung vorne liegenden Seite der Spindelmutter stehenden, im Abstand der Rasteinrichtungen verrasteten Abstützelemente bei Annäherung der Spindelmutter selbsttätig gelöst und aufgesammelt werden. Da die mit ihren Rasteinrichtungen verrasteten Abstützelemente mit der Spindelmutter unverbunden sind, so-lange diese im axialen Abstand zu ihnen steht, können auf diese Weise beliebig lange Gewindespinden in vorbestimmten Abständen an ortsfesten Abstützstellen abgestützt werden. Zugleich erfordern diese Abstützmaßnahmen keine besonders komplizierten oder platzaufwendigen Änderungen an der Spindelmutter oder den mit dieser verbundenen Teilen. Eine vertikale Montage der Gewindespindel ist ohne weiteres möglich.

Diese neue Abstützung der Gewindespindel in den zwischen den Lagerstellen und der Spindelmutter sich erstrecken Gewindespindelbereich ist auch für Lineareinheiten verwendbar, bei denen kein die Gewindespindel vollständig umgebendes, rohrartiges Gehäuse oder dergleichen vorhanden ist. Es genügt, daß eine sich längs der Gewindespindel erstreckende, zu dieser parallele Führungsbahn für die Abstützelemente vorgesehen ist, an der ringförmigen Abstützelemente unverdrehbar längsgeführt sind und gegen die die Gewindespindel über die Abstandelemente radial abstützbar ist. Demgemäß ist unter dem Begriff "mechanische Lineareinheit" an sich jede mit einem Spindeltrieb arbeitende lineare Antriebsvorrichtung verstanden, die eine drehbar gelagerte Gewindespindel aufweist, der, wie erwähnt, eine ortsfeste Führungsbahn für die Abstützelemente zugeordnet ist.

Die Rastmittel weisen einen an dem Abstützelement quer zu der Gewindespindel verschieblich gelagerte Schieber auf, der durch die Rasteinrichtungen verstellbar ist, wobei der Mitnehmer durch den Schieber selbst gebildet oder durch diesen gesteuer ist. Dieser Schieber kann mit Vorteil auch in Gestalt einer die Gewindespindel zumindest teilweise umschließenden Ringscheibe ausgebildet sein.

Konstruktiv einfache Verhältnisse ergeben sich dabei, wenn sie Rastmittel wenigstens eine an dem Schieber angeordnet Raste und die Rasteinrichtungen entsprechend gestaltete Rastvertiefungen in der Führungsbahn aufweisen. Diese Rastvertiefungen können nämlich in der Regel sehr einfach hergestellt, bspw, eingebohrt, eingefräst oder eingedrückt werden.

Die Anordnung kann mit Vorteil derart getroffen sein, daß die Mitnehmerschiene oder -stange eine längsgerichtete Vertiefung aufweist, die endseitig durch einen Anschlag begrenzt ist und in die ein durch den Schieber selbst gebildeter oder von diesem gesteuerter Mitnehmer des jeweils aufgesammelten, aus den Rasteinrichtungen gelösten Abstützelementes eingreift. Der Mitnehmer kann durch einen mit dem Schieber verbundenen Mitnehmerzapfen gebildet sein, doch sind auch Ausführungsformen denkbar, bei denen der Mitnehmer durch den Schieber selbst gebildet ist, worauf bereits hingewiesen wurde.

Bei einer mechanischen Lineareinheit, die ein die Gewindespindel umgebendes, rohrförmiges, formstabiles, längsgeschlitztes Gesäuse aufweist, das endseitig Lagerflansche für die Gewindespindel trägt und durch dessen Längsschlitz das mit der Spindelmutter verbundene Kraftübertragungselement ragt, ist es zweckmäßig, wenn die Führungsbahn auf der Innenwand des Gehäuses ausgebildet ist, so daß sich zusätzliche konstruktive Maßnahmen insoweit erübrigen. Dabei bietet es sich dann an, daß die Mitnehmerschienen oder -stangen im Bereiche des Längsschlitzes des Gehäuses angeordnet sind, wo für ihre Unterbringung ohnehin Platz zur Verfügung steht Alternativ können die Mitnehmerschienen oder -stangen aber auch die Abstandselemente durchgreifend, bspw. in unmittelbarer Nähe der Gewindespindel verlaufend, vorgesehen sein.

In der Zeichnung sind Ausführungsbeispiele des Gegenstandes der Erfindung dargestellt. Es zeigen:

Fig. 1 eine mechanische Lineareinheit gemäß der Erfindung, im axialen Schnitt, in einer Seitenansicht und im Ausschnitt,

Fig. 2 die mechanische Lineareinheit nach Fig. 1, in einer abgewandelten Ausführungsform und in einer entsprechenden Schnittdarstellung,

Fig. 3 die mechanische Lineareinheit nach Fig. 1, geschnitten längs der Linie III-III der Fig. 1, in einer Seitenansicht und in einem anderen Maßstab, unter Veranschaulichung eines mit einer Rasteinrichtung verrasteten Abstützelementes,

Fig. 4 die Anordnung nach Fig. 3, unter Veranschaulichung des in seiner gelösten Stellung stehenden Abstützelementes, in einer entsprechenden Darstellung,

Fig. 5 die mechanische Lineareinheit nach Fig. 2, geschnitten längs der Linie V-V der Fig. 2, in einer Seitenansicht und in einem anderen Maßstab, unter Veranschaulichung eines mit einer Rasteinrichtung verrasteten Abstützelementes,

Fig. 6 die Anordnung nach Fig. 5, unter Veranschaulichung des in seinem gelösten Zustand befindlichen Abstützelementes, in einer entsprechenden Darstellung,

Fig. 7 und 8 das Abstützelement nach Fig. 3 bzw. 4, jeweils geschnitten längs der Linie VII-VII der Fig. 3, in einer Seitenansicht,

Fig. 9, 10 das Abstützelement der Anordnung nach Fig.5 bzw. 6, geschnitten längs der Linie IX-IX der Fig. 5, in einer Seitenansicht, und

Fig. 11 ein Abstützelement der mechanischen Lineareinheit nach Fig. 1, in einer perspektivischen, auseinandergezogenen Darstellung und in einem anderen Maßstab.

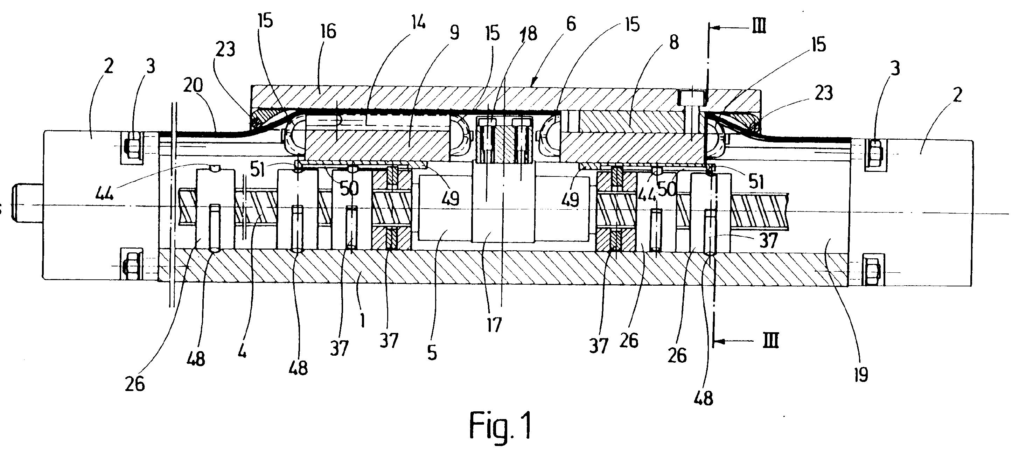

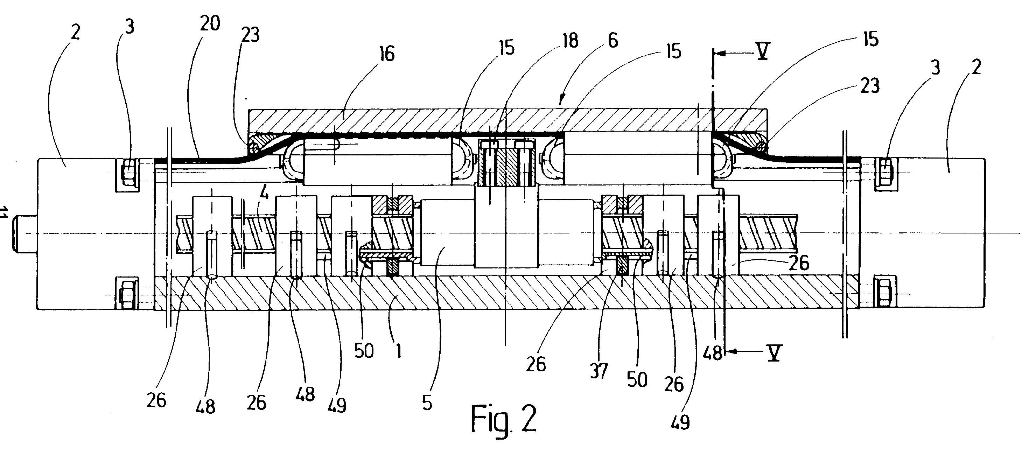

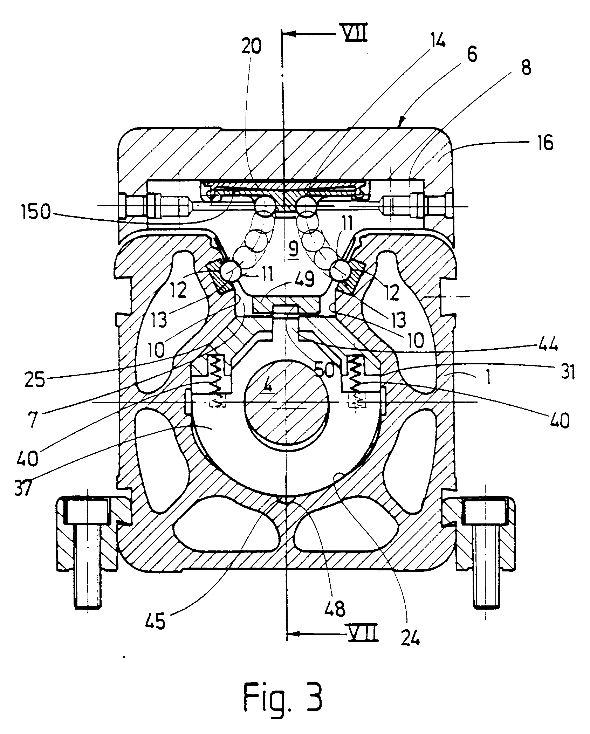

Die in den Fig. 1,2 dargestellte mechanische Lineareinheit weist ein formstabiles, längliches Gehäuse 1 auf, das in Gestalt eines Profilrohres aus Leichtmetall ausgebildet ist, dessen Querschnittsgestalt bspw. aus Fig. 3 zu ersehen ist. Das zweischalige Gehäuse 1 ist an seinen beiden Enden durch Endflansche 2 abgeschlossen, die auf die Stirnseiten des Gehäuses 1 aufgesetzt mit diesem durch Schraubenbolzen 3 verschraubt sind. In den gehäuseartigen Lagerflanschen 2 sind nicht weiter dargestellte Wälz- oder Gleitlager untergebracht, auf denen eine zu dem Gehäuse 1 koaxiale und von diesem umschlossene Gewindespindel 4 drehbar gelagert ist, die über einen vorragenden Wellenstummel von einer ebenfalls nicht weiter dargestellten Antriebsquelle, bspw. einem auf den zugeordneten Lagerflansch 2 aufgesetzten Elektromotor angetrieben werden kann. Auf der Gewindespindel 4 sitzt eine Spindelmutter 5, die gemeinsam mit der Gewindespindel 4 einen Spindeltrieb bildet und mit einem an dem Gehäuse 1 längsverschieblich geführten und gelagerten Kraftübertragungselement 6 über einen Längsschlitz 7 des Gehäuses 1 verschraubt ist. Das Kraftübertragungselement 6 weist zwei nach Art des Schlittens eines Linearlagers ausgebildete, schlittenförmige Elemente 8 von im wesentlichen T-förmiger Querschnittsgestalt auf, die mit einem im Querschnitt etwa trapezförmigen Teil 9 in den Längsschlitz 7 ragen. Die Seitenwände des trapezförmigen Teiles 9 verlaufen im Abstand etwa parallel zu den benachbarten Gehäuseseitenwänden 10 und tragen jeweils eine längsverlaufende Kugellaufbahn 11, der eine entsprechende geradlinige Kugellaufbahn 12 im Bereiche jeder der beiden Gehäusewände 10 zugeordnet ist. Die Kugellaufbahnen 12 sind in aus gehärtetem Stahl bestehenden geschliffenen Lagerleisten ausgebildet, welche in entsprechende Nuten der Gehäusewände 10 eingesetzt sind.

Wie bspw. aus den Fig. 1,3 zu ersehen, sind in jedem der schlittenartigen Elemente 8 zwei obenliegende, über die Länge durchgehende Kugelrückführungskanäle 14 ausgebildet, die nach oben zu durch ein aus Kunststoffmaterial bestehendes Abdeck- und Führungsteil 150 abgeschlossen sind, welches in einer die Kugelrückführungskanäle 14 aufnehmenden Vertiefung an der Oberseite des schlittenartigen Elementes 8 verrastet ist.

Beidseitig der beiden Kugelrückführungskanäle 14 sind an die schlittenartigen Elemente 8 jeweils zwei Kugelumlenkelemente 15 (Fig. 1) angesetzt, die jeweils einen im wesentlichen haarnadelförmigen Kugelumlenkkanal begrenzen, der den zugeordneten Kugelrückführungskanal 14 mit den entsprechenden Kugellaufbahnen 11,12 verbindet.

Auf den rillenförmigen Kugellaufbahnen 11,12 läuft jeweils eine Kugelreihe 13 (Fig. 3), deren unbelastete Kugeln in der bei Linearlagern üblichen Weise durch die zugeordneten Kugelumlenkkanäle und den zugehörigen Kugelrückführungskanal 14 umlaufend geführt sind. Wegen der rillenförmigen Gestaltung der Kugellaufbahnen 11,12 und der entsprechenden Ausbildung der Lagerungsverhältnisse ist das Kraftübertragungselement 6 durch die Kugelreihen 13 unverlierbar aber längsverschieblich an dem Gehäuse 1 gelagert.

Die beiden schlittenartigen Elemente 8 sind im axialen Abstand starr miteinander verbunden. Mit ihnen ist eine im Querschnitt im wesentlichen U-förmige massive Abdeckplatte 16 verschraubt, die auf die schlittenartigen Elemente 8 aufgesetzt ist. Auf der gegenüberliegenden Seite ist an das Kraftübertragungselement 6 ein im wesentlichen T-förmiges Kupplungselement 17 (Fig. 1) mittels Schraubenbolzen 18 angeschraubt, das in dem Innenraum 19 des Gehäuses 1 liegt und die Verbindung des Kraftübertragungselementes 6 mit der Spindelmutter 5 bewirkt.

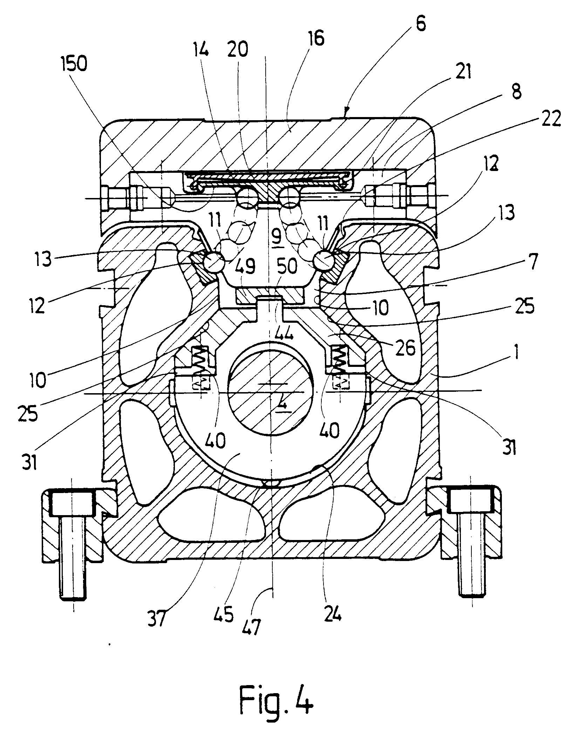

Beidseitig des Kraftübertragungselementes 6 ist der Längsschlitz 7 durch ein aus Kunststoffmaterial bestehendes elastisches Verschlußband 20 verschlossen, das mittels seitlich angeformter Halteflansche 21 (Fig. 4) in längsverlaufenden, rillenartigen Vertiefungen 22 der beiden den Längsschlitz 7 begrenzenden Gehäusewände 10 lösbar verrastet ist. Das Verschlußband 20 ist unter der Abdeckplatte 16 hindurchgeführt, wie dies bspw. den Fig. 1,3 zu entnehmen ist. An der Abdeckplatte 16 endseitig angeordnete, auf die Oberseite des Verschlußbandes 20 einwirkende Bandführungsrollen 23 drücken das Verschlußband 20 bei einer Längsbewegung des Kraftübertragungselementes 6 bezüglich des Gehäuses 1 jeweils in den Längsschlitz 7, so daß der Längsschlitz 7 beidseitig des Kraftübertragungselementes 6 immer sicher verschlossen ist.

Der Gehäuseinnenraum 19 ist, wie z.B. aus den Fig. 3,4 zu entnehmen, in seiner unteren Hälfte bei 24 etwa halbzylindrisch ausgebildet, während er in seiner oberen Hälfte durch zwei einen rechten Winkel miteinander einschließende und von den Seitenwänden 10 des Längsschlitzes 7 ausgehende, ebene Flächen 25 begrenzt ist.

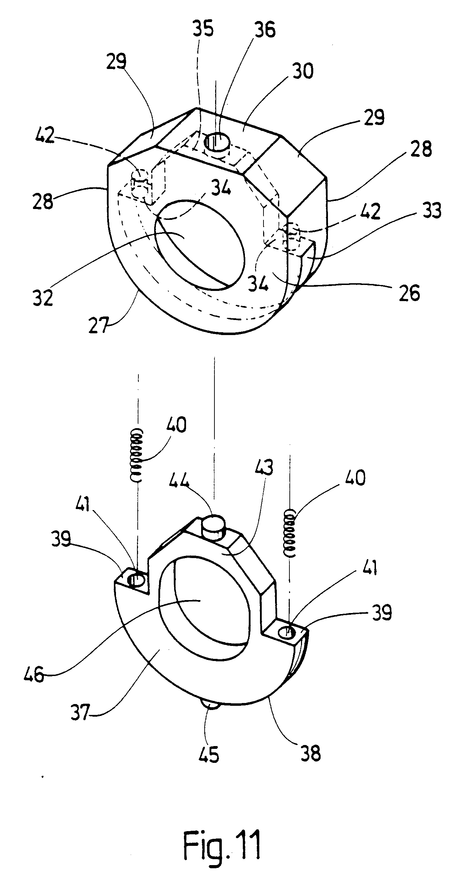

In dem Gehäuseinnenraum 19 sind beidseitig der Spindelmutter 5 auf die Gewindespindel 4 eine Anzahl aus Kunststoffmaterial hergestellter, ringförmiger Abstützelemente 26 aufgesetzt, deren Umrißgestalt dem Querschnittsprofil des Gehäuseinnenraums 19 angepaßt ist. Wie bspw. aus Fig. 11 zu entnehmen, weist jedes der schmalen Abstützelemente 26 auf seiner Umfangsfläche einen unteren, etwa halbzylindrischen Teil 27 auf, dessen Krümmungsradius jenem des halbzylindrischen Teiles 24 der Gehäuseinnenwand entspricht und der über gerade, parallele Flächenabschnitte 28 an zwei schräg aufeinander zu verlaufende, ebenfalls einen Winkel von 90° miteinander einschließende ebene Flächenbereiche 29 sich anschließt, die durch eine horizontale, ebene Fläche 30 miteinander verbunden sind. Die ebenen Flächenbereiche 29 können sich in montiertem Zustand an die ebenen Flächen 25 des Gehäuses 1 anlegen, derart, daß die scheibenartigen Abstützelemente 26 bei 25 an der Innenwand des Gehäuseinnenraumes 19 längsverschieblich, aber drehfest geführt sind. Zwischen den Flächen 25, 24 vorgesehene parallele, gerade, ebene Flächenabschnitte 31 der Innenwandung des Gehäuseinnenraums 19 entsprechen den ebenen Flächenabschnitten 28 der Abstützelemente 26. Die Ringöffnung 32 jedes der Abstützelemente 26 ist zylindrisch ausgebildet und entspricht mit Spiel dem Durchmesser der Gewindespindel 4.

Jedes der Abstützelemente 26 ist, ausgehend von seinem halbzylindrischen Umfangsflächenbereich 27, mit einem in der Symmetrieebene liegenden und etwa zur Mitte der Ringöffnung 32 reichenden Schlitz 33 versehen, der durch zwei innenliegende Schultern 34 begrenzt ist und sich oberhalb in eine in ihrer Gestalt der Außenumfangsfläche des Abstützelementes 26 angepaßte Vertiefung 35 fortsetzt, in welche eine die Fläche 30 durchdringende mittige Bohrung 36 mündet.

In dem Schlitz 33 und der Vertiefung 35 ist ein im wesentlichen ringartiger Schieber 37 in Höhenrichtung begrenzt längsverschieblich gelagert, der ein unteres, etwa halbzylindrisches Teil 38 aufweist, dessen Krümmungsradius jenem des halbzylindrischen Flächenbereiches 27 des Abstützelementes 26 in etwa entspricht. An das halbzylindrische Teil 38 schließen sich zwei auf einem gemeinsamen Durchmesser liegende, im montierten Zustand parallel zu den Schultern 34 ausgerichtete Anschlagschultern 39 an, in denen zur Aufnahme von Druckfedern 40 dienende Sacklöcher 41 ausgebildet sind. Die Druckfedern 40 sind auf der gegenüberliegenden Seite in entsprechenden Sacklöchern 42 des Abstützelementes 26 aufgenommen. An das halbzylindrische Teil 38 schließt sich ein in die Vertiefung 35 ragendes und in dieser seitlich geführtes Führungsteil 43 an, das auf seiner Oberseite einen Mitnehmerzapfen 44 trägt, der im montierten Zustand in der Bohrung 36 liegt. Dem Mitnehmerzapfen 44 diametral gegenüberliegend ist an der Unterseite des halbzylindrischen Teiles 38 eine etwa halbkugelige Raste 45 angeordnet.

Der Schieber 37 ist mit einer durchgehenden Ringöffnung 46 versehen, die nach Art eines Langloches ausgebildet ist, derart, daß der Schieber 37 in dem Schlitz 33 des Abstützelementes 26, bezogen auf Fig. 11, begrenzt auf- und abverschieblich ist, ohne durch die durchgehende Gewindespindel 4 an dieser Verschiebebewegung gehindert zu sein.

In dem halbzylindrischen Flächenbereich 24 des Gehäuseinnenraums 19 sind in vorbestimmten Abständen in der in Fig. 4 bei 47 angedeuteten Symmetrieebene liegend, der Form der Raste 45 angepaßte Rastvertiefungen 48 vorgesehen (Fig. 1,2), die ortsfeste Rasteinrichtungen bilden und zur lagefesten, lösbaren Verrastung der Abstützelemente 26 dienen.

Mit der Spindelmutter 5 sind von deren gegenüberliegenden Stirnseiten vorragend zwei gleichgestaltete Mitnehmereinrichtungen verbunden, die bei der Ausführungsform nach Fig. 1 aus zwei parallelen, flachen Mit-

EP 0 327 705 B1

nehmerleisten 49 bestehen, welche in dem Längsschlitz 7 liegend an den beiden trapezförmigen Teilen 9 der schlittenförmigen Elemente 8 des Kraftübertragungselementes 6 befestigt sind. Jede der beiden Mitnehmerschienen 49 weist eine sich über den größten Teil ihrer Länge erstreckende mittige Längsnut 50 auf, die auf der der Spindelmutter 5 abgewandten Seite durch eine Anschlagschulter 51 abgeschlossen ist. Die Länge der beiden Mitnehmerschienen 49 ist derart bemessen, daß sie die auf der jeweiligen Seite der Spindelmutter 5 angeordneten, stirnseitig aneinanderliegend aufgesammelten Abstützelemente 26 übergreift.

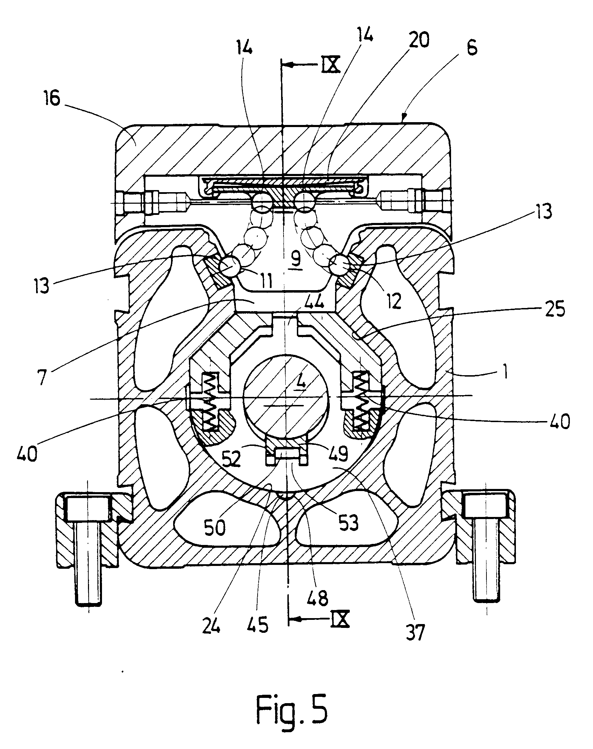

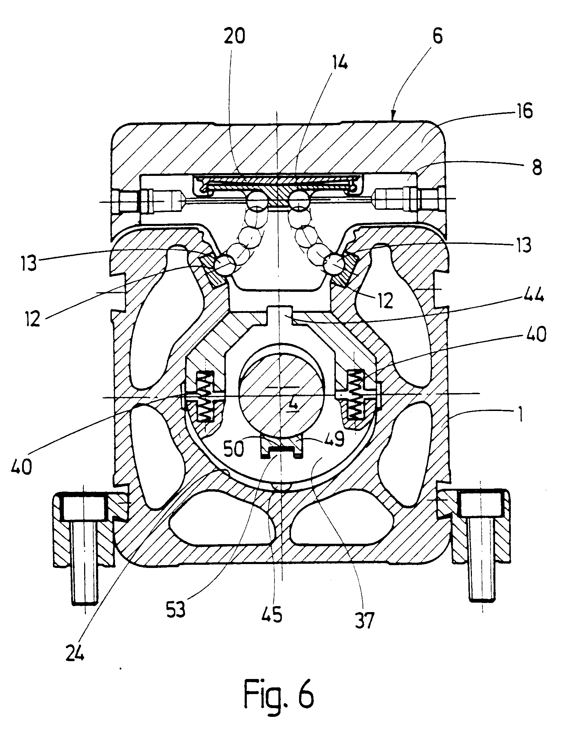

Die Ausführungsform nach den Fig. 2 und 5,6 unterscheidet sich von jener nach den Fig. 1 und 3,4 lediglich darin, daß die beiden parallelen Mitnehmerschienen 49 der Gewindespindel 4 unten unmittelbar benachbart durch eine entsprechende Ausnehmung 52 (Fig. 5) der Abstützelemente 26 und deren Schieber 37 ragend mit der Spindelmutter 5 stirnseitig verbunden sind.Auch in diesem Falle ist die Länge der Mitnehmerschienen 49 so bemessen, daß jede Mitnehmerschiene 49 die auf einer Seite der Spindelmutter 5 aufgesammelten und breitseitig aneinanderliegenden Abstützelemente 26 durchgreifen kann. Mit der randseitig ebenfalls durch eine Anschlagschulter abgeschlossenen Längsnut 50 wirkt in diesem Falle ein rechteckiger Mitnehmer 53 zusammen, während der diametral gegenüberliegende Zapfen 44 in diesem Falle lediglich zur Führung des Schiebers 37 dient und auch weggelassen werden könnte.

Bei der im Vorstehenden in zwei Ausführungsformen beschriebenen mechanischen Lineareinheit arbeitet die Gewindespindelabstützung wie folgt:

Beidseitig der Spindelmutter 5 ist auf die Gewindespindel 4 eine der Länge des bei in einer Endstellung stehender Spindelmutter 5 zwischen dieser und dem entfernt liegenden Lagerflansch 2 sich erstreckenden Spindelbereich entsprechende Zahl von Abstützelementen 26 aufgesetzt. Die mit ihrer Umrißgestalt der Profilgestalt des Gehäuseinnenraums 19 angepaßten Abstützelemente 26 sind längs der den Gehäuseinnenraum 19 begrenzenden Gehäusewandung längsverschieblich; gleichzeitig sind sie durch die Profilgestalt des Gehäuseinnenraums 19 unverdrehbar geführt. Die Druckfedern 40 drücken die Schieber 37, bezogen auf Fig. 3,4,nach unten, derart, daß die Schieber 37 in Eingriffsrichtung der Rasten 45 mit den Rastvertiefungen 48 federnd vorgespannt sind.

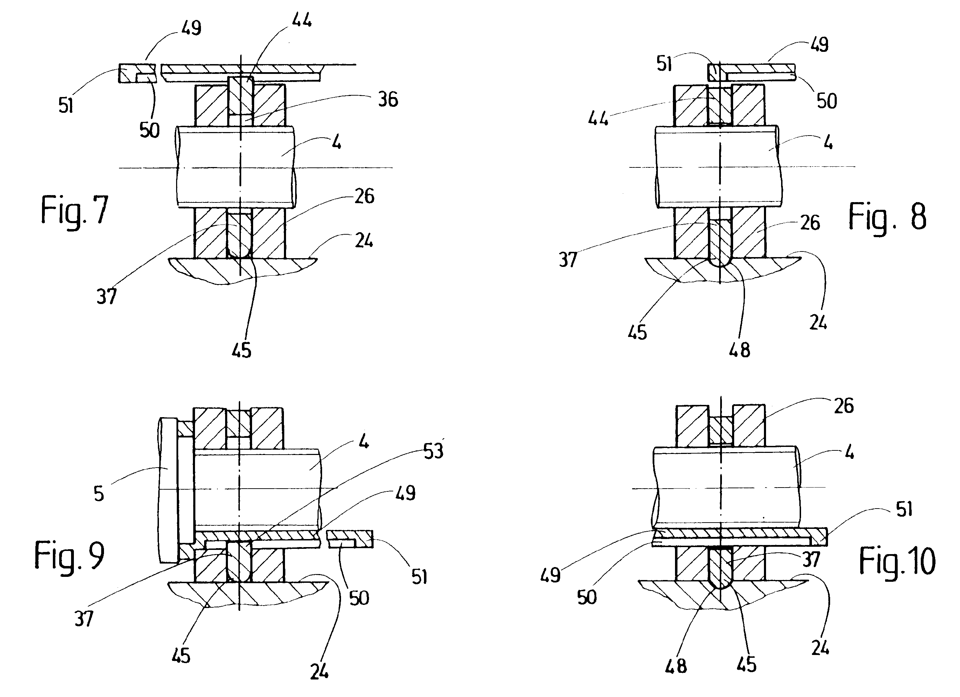

Wie aus den Fig. 7 und 8 bzw. 9 und 10 zu ersehen, ist die Anordnung derart getroffen, daß bei aus den Rastvertiefungen 48 ausgehobenen Rasten 45 der Schieber 37 entgegen der Wirkung der Druckfedern 40 gegenüber dem jeweiligen Abstützelement 26 derart verschoben ist, daß bei der Ausführungsform nach Fig. 1 der Mitnehmerzapfen 44 und bei der Ausführungsform nach Fig. 2 der Mitnehmer 53 in die Nut 50 der zugeordneten Mitnehmerschiene 49 ragt - Fig. 7,9.

Ist aber andererseits die Raste 45 eines Abstützelementes 26 in einer Rastvertiefung 48 aufgenommen, so liegt der Schieber 37 unter der Wirkung der Druckfedern 40 mit seinem halbzylindrischen Teil 38 an der halbzylindrischen Fläche 24 des Gehäuseinnenraums 19 an, womit - bei der Ausführungsform nach Fig. 1 - der Mitnehmerzapfen 44 bzw. - bei der Ausführungsform nach Fig. 2 - der Mitnehmer 53 soweit in das Abstützelement 26 zurückgeschoben ist, daß er nicht mehr mit der Anschlagschulter 51 in Eingriff kommen kann, d.h. daß er in einer unwirksamen Stellung steht.

Wird bspw., ausgehend von der Stellung nach Fig. 1, die Spindelmutter 5 nach rechts verschoben, so schiebt sie die an ihrer rechten Stirnseite aufgesammelten beiden Abstützelemente 26,deren Mitnehmerzapfen 44 in die Längsnut 50 der zugeordneten Mitnehmerschiene 49 ragen, unbehindert vor sich her. Sowie diese beiden aufgesammelten Abstützelemente 26, geschoben von der Spindelmutter 5, auf das in Fig. 1 rechts außen stehende und mit seiner Raste 45 in einer Rastvertiefung 48 verrastete Abstützelement 26 auflaufen, wird dieses mitgenommen, wobei die Raste 45 wegen ihrer halbkugeligen Gestalt aus der Rastvertiefung 48 austritt. Damit wird der Schieber 37 nach oben bewegt; der vorher versenkt stehende und deshalb die Bewegung der Mitnehmerschiene 49 nicht behindernde Mitnehmerzapfen 44 wird radial vorgeschoben und greift nunmehr in die Längsnut 50 der Mitnehmerschiene 49 ein. Die Spindelmutter 5 kann ihre nach rechts gerichtete Längsbewegung fortsetzen und gegebenenfalls weitere in Rastvertiefungen 48 verrastete Abstützelemente 26 aufsammeln.

Die auf ihrer Rückseite befindlichen, breitseitig aneinanderliegend aufgesammelten Abstützelemente 26 werden von der Spindelmutter bei der geschilderten Rechtsbewegung mitgeschleppt, weil ihre Mitnehmerzapfen 44 in die Längsnut 50 der zugeordneten Mitnehmerschiene 49 ragen und das endständige Abstützelement 26 mit seinem vorragenden Mitnehmerzapfen 44 gegen die Anschlagschulter 51 axial verriegelt ist.

Sowie im Verlaufe der Längsbewegung der Spindelmutter 5 das jeweils endständige Abstützelement 26 mit seiner Raste 45 in eine Rastvertiefung 48 einfällt, geht sein Mitnehmerzapfen 44 in die versenkte unwirksame Stellung über, womit die axiale Kupplung dieses Abstützelementes 26 mit der Mitnehmerschiene 49 gelöst wird. Das verrastete Abstützelement 26 bleibt deshalb zurück; die Spindelmutter 5 schleppt die verbliebenen aufgesammelten Abstützelemente 26 weiter, von denen sie an jeder nächstfolgenden Rastvertiefung 48 eines in der beschriebenen Weise zurückläßt.

Im Ergebnis werden somit in dem sich verkürzenden - bezogen auf Fig. 1 - rechten Gewindespindelbereich die vorher verteilt angeordneten Abstützelemente 26 bei dieser Längsbewegung der Spindelmutter 5 zunehmend aufgesammelt, während gleichzeitig über den sich verlängernden linken Gewindespindelbereich die Abstützelemente 26 in den durch die Rastvertiefungen 48 vorgegebenen Abständen verteilt zurückgelassen werden. Damit ist eine einwandfreie radiale Abstützung der Gewindespindel 4 in den Bereichen zwischen den Lagerflanschen 2 und der Spindelmutter 5 unabhängig von der jeweiligen Stellung der Spindelmutter 5 gewährleistet.

Bei einer Drehrichtungsumkehr der Gewindespindel 4 erfolgt dar Aufsammeln bzw. Verteilen der Abstützelemente 26 in der gleichen Weise auf der jeweils anderen Seite der Spindelmutter 5.

Die Wirkungsweise der Ausführungsform nach Fig.2 ist identisch, so daß sich eine nochmalige Erläuterung erübrigt. Da bei dieser Ausführungsform die Mitnehmerschienen 49 unterhalb der Gewindespindel 4 verlaufend die aufgesammelten Abstützelemente 26 durchgreifen, zeichnet sich diese Ausführungsform durch einen noch geringeren Platzbedarf für die Mitnehmerschienen 49 aus. Diese Ausführungsform ist deshalb auch für Lineareinheiten brauchbar, bei denen die Gewindespindel über längere Streckenabschnitte allseitig von einem Schutzgehäuse umgeben ist.

Anstelle der Mitnehmerschienen 49 könnten naturgemäß auch anders gestaltete Elemente, bspw. Mitnehmerstangen, Verwendung finden, denen dann entsprechende Mitnehmer an den Abstützelementen 26 zugeordnet sind.

Bei den beschriebenen Ausführungsformen trägt der ringförmige Schieber 37 einen Mitnehmerzapfen 44 oder alternativ einen entsprechend ausgebildeten Mitnehmer 53. Prinzipiell könnte die Anordnung aber auch derart getroffen sein, daß auf solche zapfenartigen, vorstehenden Teile des Schiebers 37 verzichtet und dieser unmittelbar als Mitnehmer wirkend ausgebildet ist. Auch wäre es vorstellbar, daß bspw. der Mitnehmerzapfen 44 in der Bohrung 36 des jeweiligen Abstützelementes 26 als getrenntes Teil längsverschieblich gelagert wäre, das sich - gegebenenfalls federbelastet - gegen den Schieber 37 abstützt und von diesem gesteuert ist.

## Patentansprüche

1. Mechanische Lineareinheit zur Erzeugung einer begrenzten Linearbewegung eines angetriebenen Kraftübertragungselementes (6), mit einem eine drehbar gelagerte Gewindespindel (4) und wenigstens eine zugeordnete Spindelmutter (5) aufweisenden Spindeltrieb, sowie mit wenigstens zwei beidseitig der Spindelmutter auf der Gewindespindel angeordneten ringförmigen Abstützelementen (26), die unter Abstützung der Gewindespindel auf einer zu dieser parallelen, ortsfesten Führungsbahn (24,25,31) unverdrehbar und längsverschieblich geführt und abgestützt sind und die über zugeordnete, auf beiden Seiten der Spindelmutter (5) mit dieser verbundene Mitnehmereinrichtungen (49,50,51) mit der Spindelmutter selbsttätig derart kuppelbar sind, daß sie bei einer Längsbewegung der Spindelmutter zeitweilig mitschleppbar sind, wobei jedes der Abstützelemente (26) federnd vorgespannte Rastmittel (45) aufweist, die mit in vorbestimmten Abständen über die Länge der Führungsbahn (24, 25, 31) verteilten ortsfesten Rasteinrichtungen (48) verrastbar und aus diesen Rasteinrichtungen durch eine von der Spindelmutter (5) ausgehende axiale Schubbewegung lösbar sind, und wobei an jedem Abstützelement (26) wenigstens ein von den Rasteinrichtungen ansteuerbarer, an dem Anstützelement quer zu der Gewindespindel verschieblich gelagerter Schieber (37) mit wenigstens einem Mitnehmer angeordnet ist, über den das Abstützelement bei gelösten Rastmitteln mit der zugeordneten Mitnehmereinrichtung axial kuppelbar ist und der bei verrasteten Rastmitteln unwirksam ist, dadurch gekennzeichnet, daß jede Mitnehmereinrichtung wenigstens eine von der Spindelmutter (5) stirnseitig axial vorragende, zu der Gewindespindel (4) parallele Mitnehmerschiene (49) oder -stange aufweist, die alle auf der jeweiligen Seite der Spindelmutter (5) axial aufgesammelten Abstützelemente (26) gemeinsam über- oder durchgreifend ausgebildet ist und Kupplungsmittel (50,51) für dessen Mitnehmer trägt.

2. Lineareinheit nach Anspruch 1, dadurch gekennzeichnet, daß die Rastmittel wenigstens eine an dem Schieber (37) angeordnete Raste (45) und die Rasteinrichtungen entsprechend gestaltete Rastvertiefungen (48) in der Führungsbahn aufweisen.

3. Lineareinheit nach einem der vorhergehenden Ansprüche, dadurch gekennzeichnet, daß der Schieber (37) in Gestalt einer die Gewindespindel (4) zumindest teilweise umschließenden Ringscheibe ausgebildet ist.

4. Lineareinheit nach Anspruch 1, dadurch gekennzeichnet, daß die Mitnehmerschiene (49) oder -stange eine längsgerichtete Vertiefung (50) aufweist, die endseitig durch einen Anschlag (51) begrenzt ist und in die ein durch den Schieber (37) selbst gebildeter oder durch diesen gesteuerter Mitnehmer (44) des jeweils aufgesammelten, aus den Rasteinrichtungen (48) gelösten Abstützelementes (26) eingreift.

5. Lineareinheit nach Anspruch 4, dadurch gekennzeichnet, daß der Mitnehmer durch einen mit dem Schieber (37) verbundenen Mitnehmerzapfen (44; 53) gebildet ist.

6. Lineareinheit nach einem der vorhergehenden Ansprüche, dadurch gekennzeichnet, daß sie ein die Gewindespindel umgebendes, rohrförmiges, formstabiles, längsgeschlitztes Gehäuse aufweist, das endseitig Lagerflansche für die Gewindespindel trägt und durch dessen Längsschlitz das mit der Spindelmutter verbundene Kraftübertragungselement ragt, und daß die Führungsbahn auf der Innenwand des Gehäuses (1) ausgebildet ist.

7. Lineareinheit nach Anspruch 6, dadurch gekennzeichnet, daß die Mitnehmerschiene (49) oder -stange im Bereiche des Längsschlitzes (7) des Gehäuses (1) angeordnet ist.


## Claims

1. A mechanical linear unit for producing a limited linear movement of a driven force-transmitting element (6), having a spindle drive having one rotatably mounted screwthreaded spindle (4) and at least one associated spindle nut (5), and at least two annular bearing elements (26) which are disposed on the screwthreaded spindle on both sides of the spindle nut and which support the screwthreaded spindle and are non-rotatably and longitudinally displaceably guided and borne on a fixed guideway (24, 25, 31) parallel therewith and which are so coupled automatically to the spindle nut via associated entraining means (49, 50, 51) connected to the spindle nut (5) on both sides thereof that they can be temporarily entrained when the spindle nut makes a longitudinal movement, each of the bearing elements (26) having resiliently prestressed ratchet devices (45) which can be latched into fixed ratchet means (48) distributed at predetermined intervals over the length of the guideway (24, 25, 31) and can be released from said ratchet means by a translatory motion starting from the spindle nut (5), while disposed on each bearing element (26) is at least one slide (37) which can be controlled by the ratchet means and is mounted on the bearing element to be displaced transversely of the screwthreaded spindle and which has at least one entraining means via which the bearing element can be axially coupled to the associated entraining means when the ratchet devices are released and which is non-operative when the ratchet devices are latched in, characterized in that each entraining means has at least one entraining bar (49) or rod parallel with the screwthreaded spindle (4) and projecting axially from the spindle nut (5) at the end face, said entraining bar or rod being constructed to engage jointly over or through all the bearing elements (26) axially collected on the particular side of the spindle nut (5) and bearing coupling means (50, 51) for their entraining member.

2. A linear unit according to claim 1, characterized in that the ratchet devices have at least one ratchet (45) disposed on the slide (37), the ratchet means having correspondingly shaped ratchet depressions (48) in the guideway.

3. A linear unit according to one of the preceding claims, characterized in that the slide (37) is constructed in the form of an annular disc at least partially enclosing the screwthreaded spindle (4).

4. A linear unit according to claim 1, characterized in that the entraining bar (49) or rod is formed with a longitudinally directed depression (50) which is bounded at the end by a stop (51) and in which there engages an entraining member (44), formed by the slide (37) itself or controlled thereby, of the particular collected bearing element (26) released from the ratchet means (48).

5. A linear unit according to claim 4, characterized in that the entraining member is formed by an entraining pin (44; 53) connected to the slide (37).

6. A linear unit according to one of the preceding claims, characterized in that it has a tubular, dimensionally stable, longitudinally slotted casing which encloses the screwthreaded spindle and which bears at its end bearing flanges for the screwthreaded spindle and through whose longitudinal slot the force-transmitting element connected to the spindle nut extends, the guideway being formed on the inside wall of the casing (1).

7. A linear unit according to claim 6, characterized in that the entraining bar (49) or rod is disposed in the zone of the longitudinal slot (6) in the casing (1).


## Revendications

1. Mécanisme linéaire pour engendrer un mouvement linéaire limité d'un élément de transmission de force (6) entraîné, ce mécanisme comportant: un mécanisme à broche présentant une broche filetée (4) montée à rotation, au moins un écrou de broche (5) qui lui est conjugué, et au moins deux éléments-supports annulaires (26) agencés de part et d'autre de l'écrou de broche, sur la broche filetée, lesquels, tout en supportant la broche filetée sur une glissière de guidage (24, 25, 31) qui est fixe et parallèle à la broche, sont supportés et guidés avec possibilité de déplacement longitudinal mais sans possibilité de rotation, et peuvent être automatiquement couplés à l'écrou de broche par des moyens entraîneurs conjugués (49, 50, 51) liés à l'écrou de broche (5), des deux côtés de celui-ci, de manière telle que, lors d'un mouvement longitudinal de l'écrou de broche, ils puissent être également entraînés temporairement, chacun des éléments-supports (26) présentant des moyens d'enclenchement (45) précontraints élastiquement qui peuvent être enclenchés avec des dispositifs de verrouillage-enclenchement (48), fixes et répartis à intervalles prédéterminés sur la longueur de la glissière de guidage (24, 25, 31), et peuvent être dégagés de ces dispositifs de verrouillage-enclenchement par un mouvement de poussée axiale provenant de l'écrou de broche (5), au moins un coulisseau (37), lequel peut être commandé par les dispositifs de verrouillage-enclenchement et est monté sur l'élément-support avec possibilité de déplacement transversal par rapport à la broche filetée, étant prévu avec au moins un entraîneur par lequel, lorsque les moyens d'enclenchement sont libérés, l'élément-support peut être couplé axialement au moyen entraîner conjugué, cet entraîneur étant inopérant lorsque les moyens d'enclenchement sont verrouillés-enclenchés, caractérisé par le fait que chacun des moyens entraîneurs présente au moins un rail ou une tringle d'entraîneur (49), qui est parallèle à la broche filetée (4), fait saillie frontalement et axialement par rapport à l'écrou de broche (5), est aménagée de manière à être en condition d'engagement, par chevauchement ou par pénétration, avec tous les éléments-supports rassemblés axialement sur le côté considéré de l'écrou de broche (5) et porte des moyens d'accouplement (50, 51) pour les entraîneurs de celui-ci.

2. Mécanisme linéaire selon revendication 1, caractérisé par le fait que les moyens d'enclenchement présentent au moins un organe d'arrêt (45) agencé sur le coulisseau (37), et les dispositifs de verrouillage-enclenchement présentent des dépressions d'enclenchement (44), de configuration correspondante, aménagées dans la glissière de guidage.

3. Mécanisme linéaire selon l'une des revendications précédentes, caractérisé par le fait que le coulisseau (37) est réalisé sous la forme d'un disque annulaire entourant au moins partiellement la broche filetée (4).

4. Mécanisme linéaire selon revendication 1, caractérisé par le fait que le rail ou la tringle d'entraîneur (49) présente une dépression dirigée longitudinalement (50), laquelle possède une extrémité délimitée par une butée (51) et dans laquelle s'engage un entraîneur (44) formé par le coulisseau (37) proprement dit ou commandé par celui-ci, cet entraîneur étant l'entraîneur de celui des éléments-supports (26) qui se trouve alors dégagé des dispositifs de verrouillage-enclenchement (48) et collecté.

5. Mécanisme linéaire selon revendication 4, caractérisé par le fait que l'entraîneur est formé par un téton entraîneur (44; 53) lié au coulisseau (37).

6. Mécanisme linéaire selon l'une des revendications précédentes, caractérisé par le fait qu'il présente un carter tubulaire, de forme stable, fendu longitudinalement, entourant la broche filetée, ce carter portant à ses extrémités des flasques de palier pour la broche filetée et laissant déborder au travers de sa fente longitudinale l'élément de transmission de force solidaire de l'écrou de broche, et par le fait que la glissière de guidage est formée sur la paroi intérieure du carter (1).

7. Mécanisme linéaire selon revendication 6, caractérisé par le fait que le rail ou la tringle d'entraîneur (49) est agencé dans la région de la fente longitudinale (7) du carter (1).

Fig. 1

Fig. 2

EP 0 327 705 B1

Fig. 3

Fig. 4

Fig. 5

Fig. 6

Fig. 7

Fig. 8

Fig. 9

Fig. 10

Fig. 11